# EUROPEAN PATENT APPLICATION

(11) **EP 3 923 533 A1**
(43) Date of publication of application: **15.12.2021**
(21) Application number: 20179095.3
(22) Date of filing: 09.06.2020
(51) Int. Cl.: H04L 29/06, H04L 12/707, H04L 12/801

(54) **MULTIPATH PROXY**

(71) Applicant: Tessares SA, 1348 Louvain-La-Neuve (BE)
(72) Inventor: BONAVENTURE, Olivier, 5030 Gembloux (BE); DETAL, Gregory, 1348 Ottignies-Louvain-la-Neuve (BE)
(74) Representative: IP HILLS NV

(57) **Abstract**

Example embodiments describe a multi-path conversion proxy (100) for providing multi-path network access between a first (110) and second (120) end node by providing (201) a first multi-path network connection (210, 211) between the first end node (110) and the multi-path conversion proxy (100), and by providing (202) a second network connection (212) between the multi-path conversion proxy (100) and the second end node (120); and wherein the multi-path conversion proxy (100) is further configured to perform i) selecting (203, 304) a forwarding ruleset (205) for forwarding (210) data by the first end node to the multi-path conversion proxy over subflows (210, 211) of the first multi-path network connection; ii) pushing (204) the selected forwarding ruleset (205) to the first end node.

## Description

### Technical Field

The present disclosure relates, among others, to a multi-path conversion proxy for providing multi-path network access between a first end node and second end node by providing a first multi-path network connection between the first end node and the multi-path conversion proxy, and by providing a second network connection between the multi-path conversion proxy and the second end node.

### Background

Multi-path network protocols allow establishing network connections between networking nodes over different networking paths.

One example of a multi-path network protocol is multipath TCP, MPTCP, a TCP extension that allows establishing a TCP connection between networking endpoints over different networking paths. Each such path is then referred to as a subflow. The first path along which the initial connection is established is referred to as the primary subflow while the one or more additional paths are referred to as the auxiliary subflows. The latest version of MPTCP is specified and published by the Internet Engineering Task Force, IETF, under RFC6824.

Another example of a multi-path network protocol is the QUIC transport protocol and published by the Internet Engineering Task Force, IETF, as draft-ietf-qu ic-transport.

A problem with multi-path network protocols is that both end nodes must support the protocol. Solutions have been proposed to solve the above problem. For example, EP2882148A1 discloses a multipath proxying server, or shortly multipath proxy, that accepts a first MPTCP connection with a client node and establishes a second TCP connection with the server node. To this end, the client node forwards the destination IP address of the server node to the proxying server.

A similar approach is disclosed in the 0-RTT TCP Convert Protocol currently published by the IETF under draft-ietf-tcpm-converters. The 0-RTT TCP Convert Protocol discloses a proxy function called Transport Converter that relays data exchanged over a first, upstream connection between a client node and the proxy, to a second, downstream connection between the proxy and the server node, or vice versa. The Transport Converter then maintains the state that associates one upstream connection to a corresponding downstream connection. The 0-RTT TCP Convert Protocol then defines a so-called Convert message format that may be included in SYN, SYN+ACK or ACK segments for exchanging TCP related information between the client node and the Transport Converter. One disclosed use case is the MPTCP extension wherein the Transport Converter accepts a MPTCP connection as upstream connection and establishes a TCP or MPTCP connection with the server node as downstream connection. The destination IP address and port number of the server node is then reported to the Transport Converter within such a convert message.

### Summary

A problem with multipath network connections that have such an intermediate proxy is how the data is relayed over the different paths. More particular, the relaying is performed in different locations depending on the direction of the traffic, e.g. upstream or downstream.

Amongst others, it is an object of embodiments of the invention to provide an improved relaying of data over a multipath network connection having a multipath proxy in between.

This object is achieved, according to a first example aspect of the present disclosure, by a multi-path conversion proxy for providing multi-path network access between a first and second end node by providing a first multi-path network connection between the first end node and the multi-path conversion proxy, and by providing a second network connection between the multi-path conversion proxy and the second end node; and wherein the multi-path conversion proxy is further configured to perform selecting a forwarding ruleset for forwarding data by the first end node to the multi-path conversion proxy over subflows of the first multi-path network connection; and to perform pushing the selected forwarding ruleset to the first end node.

In other words, the intermediate multi-path conversion proxy decides how the first end node will forward the data over the different subflows of the first multi-path network connections. This way, the multi-path conversion proxy controls the relaying of both upstream and downstream data over the different subflows. As the proxy is the only node than can monitor both the first and second connection, a more optimal relaying can be achieved.

According to example embodiments, the forwarding ruleset is based on an application protocol using the first multi-path network connection. In other words, the proxy may decide to relay data from different application protocols over different subflows. This allows matching application protocol specific performance requirements to the performance metrics of the respective subflows.

According to example embodiments the forwarding ruleset is based on a type of application data transported over the first multi-path network connection. Again, the proxy may decide to relay different types of data over different subflows even when the different types of data comes from the same application protocol. This allows matching specific performance requirements of the different data types to the performance metrics of the respective subflows.

According to example embodiments the forwarding ruleset comprises a program code for execution on the first end node, and the pushing comprises sending the executable program code to the first end node.

This allows a large flexibility for defining the ruleset independent from the first end node because the program code can be adapted specifically for the type of end node.

According to example embodiments the selecting comprises determining parameters of a predefined forwarding ruleset, and the pushing comprises sending the parameters to the first end node.

This allows a smaller memory footprint when pushing the selected ruleset to the first end node because only parameters need to be sent instead of all the forwarding rules.

According to example embodiments the multi-path conversion proxy is further configured to perform selecting and applying a second forwarding ruleset for relaying data by the multi-path conversion proxy to the first end node over the subflows of the first multi-path network connection.

In other words, the first ruleset determines the relaying or forwarding rules from the first end node to the proxy and the second ruleset determines the relaying or forwarding rules from the proxy to the first end node. This further assures an optimal distribution between the different subflows.

According to example embodiments the steps may be performed after initializing the first multi-path network connection. This way, the ruleset may be determined based on actual data traffic over the different subflows. Also, this allows updating the ruleset at any time during the ongoing connection. The steps may also be performed during initialization of the first multi-path network connection. This may result in a further optimization in the setup of the different subflows, i.e. the pushing of the ruleset may be embedded withing control information used during the setup of the different subflows.

According to example embodiments the first multi-path network connection is a multi-path TCP, MPTCP, connection or a connection according to a QUIC transport layer network protocol.

According to example embodiments, the multi-path conversion proxy further comprises at least one processor and at least one memory including computer program code, the at least one memory and computer program code configured to, with the at least one processor, cause the performing of the multi-path conversion proxy.

According to a second example aspect, a method is disclosed, comprising, by a multi-path conversion proxy:
- providing multi-path network access between a first and second end node further comprising:
   ∘ providing a first multi-path network connection between the first end node and the multi-path conversion proxy, and by
   ∘ providing a second network connection between the multi-path conversion proxy and the second end node;
- selecting a forwarding ruleset for forwarding data by the first end node to the multi-path conversion proxy over subflows of the first multi-path network connection;
- pushing the selected forwarding ruleset to the first end node.

According to a third example aspect, a method is disclosed comprising, by a first end node:
- establishing a first multi-path network connection having subflows with a multi-path conversion proxy,
- receiving from the multipath conversion proxy a selected forwarding ruleset for forwarding data to the multi-path conversion proxy over the subflows;
- applying the forwarding ruleset to the first end node.

According to a fourth example aspect, a networking node is disclosed comprising means configured for performing:
- establishing a first multi-path network connection having subflows with a multi-path conversion proxy,
- receiving from the multipath conversion proxy a selected forwarding ruleset for forwarding data to the multi-path conversion proxy over the subflows;
- applying the forwarding ruleset to the first end node.

According to a fifth example aspect, a computer program product is disclosed comprising computer-executable instructions for causing a networking node to perform the method according to the second or third example aspect.

### Brief Description of the Drawings

Some example embodiments will now be described with reference to the accompanying drawings.
Fig. 1 illustrates, according to example embodiments, a network connection between two network end nodes with an intermediate multi-path conversion proxy;
Fig. 2 illustrates, according to example embodiments, steps performed by two network end nodes and an intermediate multi-path conversion proxy for establishing a network connection between the end nodes; and
Fig. 3 illustrates, according to example embodiments, steps performed by two network end nodes and an intermediate multi-path conversion proxy for establishing a TCP network connection between the end nodes; and
Fig. 4 shows an example embodiment of a suitable computing system for performing one or several steps in embodiments of the invention.

### Detailed Description of Embodiment(s)

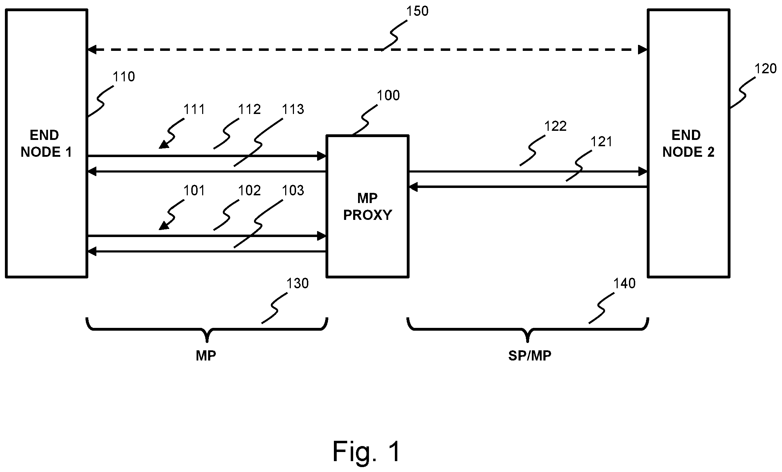

Fig. 1 illustrates, according to an example embodiment, a network connection 150 according to a transport layer protocol between a first network node 110 and second network node 120. The network connection 150 comprises at least a first multi-path network connection 130 between the first end node and a multi-path conversion proxy 100, shortly proxy, and a second network connection 140 between the multi-path conversion proxy and the second end node 120. The multipath connection 130 allows network communication 112, 113, 102, 103 between the first end node 110 and the proxy 100 over different network paths or subflows 101, 111. When first node 110 sends a data packet over network connection 150 to second node 120, the transport layer protocol will forward the packet over one of the network paths 101, 111 to proxy 100. Proxy 100 then forwards the packets over network path 122 to the second end node 120. The other way around, when second end node 120 sends a data packet over connection 150 to the first end node 110, it will forward the packet over network connection 121 to proxy 100. Proxy 100 then forwards the packet over one of the network paths 102 or 103 to first end node 110.

Proxy 100 may be transparent to one or both of end nodes 110, 120. In this case, end nodes 110, 120 are not aware of the intermediate proxy 100. In the example of Fig. 1, this would mean that for first end node 110 the network connection 150 will appear as a multipath connection 130 with the end node 120. For second end node 120 the network connection 150 will appear as single path connection 140 with the first end node 110. Proxy 100 may also be non-transparent, i.e. visible, to one or both of the end nodes 110, 120.

The connection 150 is a combination of a first connection 130 and second connection 140. This may be understood as that proxy 100 maintains separate stateful connections 130, 140 with the respective end nodes 110, 120 and relays packets between the connections 130, 140 to let the combination of the two connections appear as a single network connection 150 to the end nodes 110, 120.

According to example embodiment, connection 130 may be established as a multipath TCP, MPTCP, network connection. MPTCP is a TCP extension that allows establishing a TCP connection between networking endpoints over different networking paths. Each such path 101, 111 is then referred to as a subflow. The first path along which the initial connection is established is referred to as the primary subflow, e.g. path 101. The one or more additional paths are referred to as the auxiliary subflows, e.g., path 111. Network connection 140 may be established as a TCP or MPTCP connection.

Similarly, connections 130, 140, may be established according to the QUIC transport protocol, e.g. as published by the Internet Engineering Task Force, IETF, under the name draft-ietf-quic-transport.

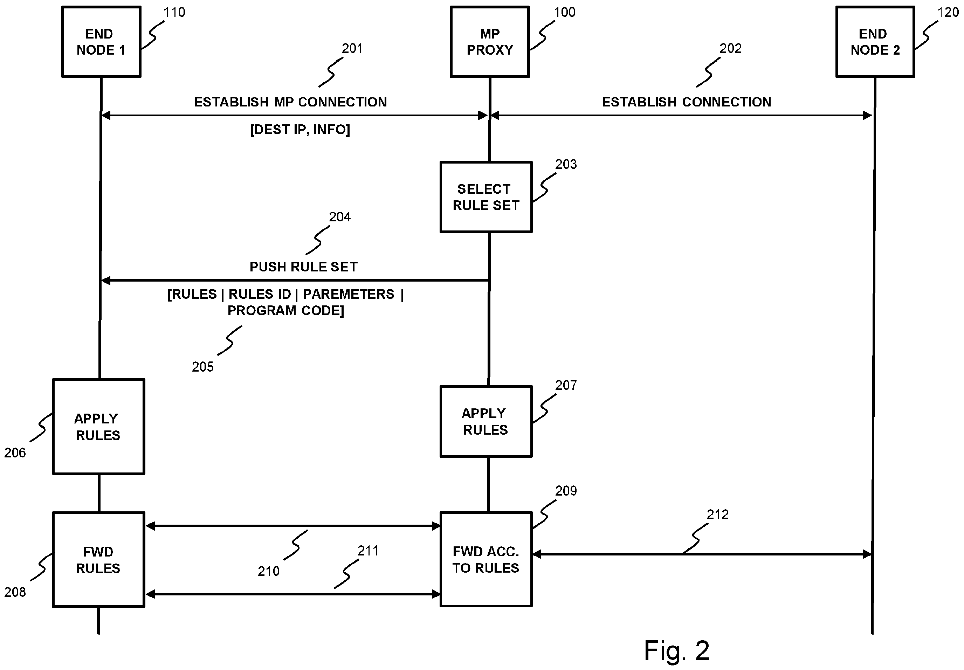

Fig. 2 illustrates steps performed by end nodes 110, 120 and proxy 100 for establishing a connection 150 according to an example embodiment. At a certain moment in time, end node 110 decides to establish a connection with end node 120. First, a first multipath connection 201 is established with proxy 100. Then, a second connection 202 is established between proxy 100 and end node 120. Second connection 202 may be a single path or multipath connection. For example, when end node 120 has multipath capabilities also a multipath connection may be established with end node 120.

Thereupon, proxy 100 determines or selects 203 a ruleset for end node 110. Such ruleset identifies a set of rules on how to forward data packets from end node 110 over the multiple network paths 210, 211 to the proxy 100. Thereupon proxy node 100 pushes the ruleset by message 204 to end node 110 upon which end node 110 applies the rules from the ruleset in step 206. From that moments onwards, node 110 forwards data packets having end node 120 as destination over network path 210 and/or 211 according to the applied forwarding rules. The selecting step 203, pushing step 204 and applying step 206 may be performed in different ways. For example, different rulesets may be defined upfront and be made available in end node 110. During selecting step 203, proxy 100 then selects the ruleset by selecting an identification of the ruleset and specifies this identification 205 in the message 204 to end node 110. Node 110 then retrieves the identification 205 from the message, retrieves the ruleset associated with the identification and applies the ruleset under step 206. According to another example, node 110 stores one or more parameterized rulesets. During the selecting step 203, proxy 100 determines a set of parameters for the parameterized ruleset. The parameters 205 and, optionally, an identification of the parameterized ruleset, is then incorporated in message 204. Thereupon, end node 110 retrieves the parameters from the message 204 and applies the parameters to the parameterized ruleset under step 206. According to another example, the ruleset is in the form of a program code for execution on the end node 110. Proxy 100 may select the program code from a predetermined set of program codes or, alternatively, generate the program code during the selecting step 203. The program code 205 is then added to message 204. Upon reception of message 204, end node 110 applies the ruleset by starting the execution of the received program code during which the forwarding rules are executed as illustrated under step 208.

According to a further example embodiment, proxy 100 further selects a second ruleset under step 203 comprising second forwarding rules for application by proxy 100. These rules are then applied under step 207 and define the forwarding of data packets received from end node 120 from connection 212 over the different network paths 210, 211.

In the example of Fig. 1, the selecting 203 and application 206 of the ruleset is performed after establishing network connections 130, 140 under respective steps 201, 202. The selecting and application steps 203, 206 may also be performed during the establishing step 201, i.e. such that network connection 150 is only operable after the rulesets have been applied. Advantageously, the message 204 for pushing the ruleset is then combined with an initialization segment exchanged between end node 110 and proxy 100 during the establishing 201 of the connection 130. The selecting and applying steps 203, 206 may also be performed for updating an already applied ruleset.

The rulesets may be based on different parameters. A ruleset may be based on an application protocol using the multi-path transport protocol for exchanging data between the end nodes 110 and 120. For example, the ruleset may have rules that data packets from a first application protocol are to be forwarded along the first path 210 and data packets from a second application protocol are to be forwarded along the second path 211. A ruleset may also be based on a certain type of application data, i.e. the type of data exchanged between the end nodes 110, 120. For example, the ruleset may have rules that video data is to be forwarded along the first path 210 and text data is to be forwarded along the second path 211.

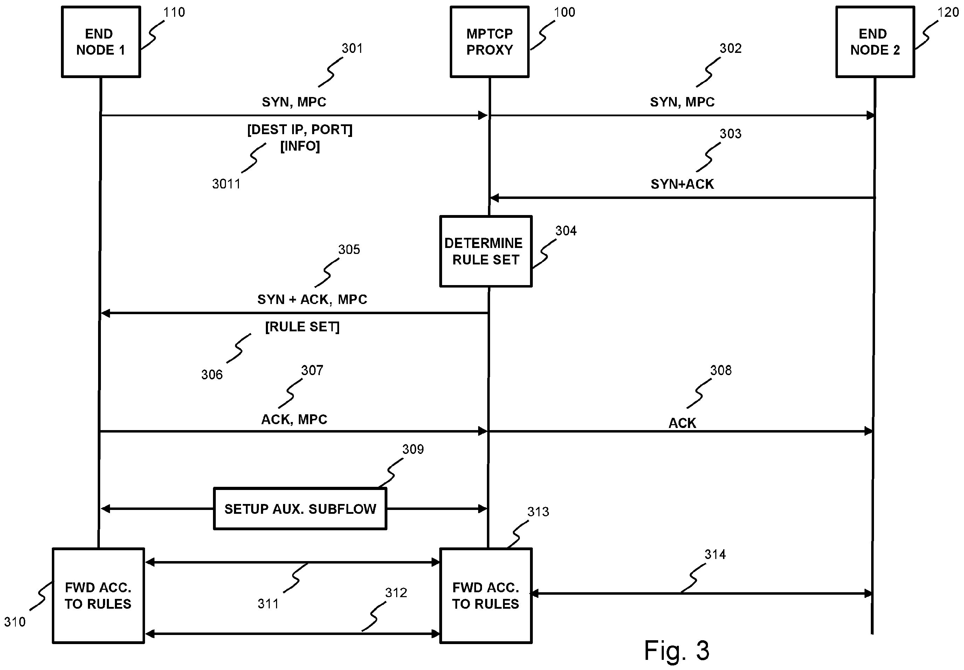

Fig. 3 illustrates steps performed by end nodes 110, 120 and proxy 100 for establishing the connection 150 according to another example embodiment. Fig. 3 illustrates an example case wherein the transport layer protocol is multipath TCP, MPTCP. At a certain moment in time, node 110 decides to initiate the establishing of a MPTCP network connection 150 with end node 120. In this example, end node 110 is the initiating or client node and end node 120 is the responding or server node. First, node 110 sends a SYN segment 301 to proxy 100. In the SYN segment 301, node 110 includes further information 3011 such as the option that it is multi-path capable, MPC, the destination network address of end node 120, the destination port number of end node 120 and, optionally, further information that may be used by proxy 100 for selecting the ruleset under later step 304. This information may be included in an optional field of the SYN segments 301 and/or as payload data of the SYN segment 301. Thereupon, proxy 100 sends a SYN segment to end node 120 using the destination address and port number from SYN segment 301. Then, node 120 replies with a SYN+ACK acknowledgement 303. In this example, node 120 does not support multipath, hence segment 303 does not include the MPC option. When receiving segment 303, proxy 100 determines or selects the ruleset under step 304. Proxy 100 then sends segment 305 to end node 110 including the selected ruleset 306. Ruleset 306 may again be included in an optional header field of the segment 305, for example when the ruleset 306 is specified by a short identification and/or by a limited set of parameters. Ruleset 306 may also be included as payload data in segment 305, for example when the forwarding rules themselves are included in the ruleset 306 or when the ruleset is provided as a program code. Upon receiving the segment 305, end node 110 replies by an ACK segment 307 thereby concluding the three-way handshake with proxy 100 from the side of the end node 110. Upon receiving the segment 307, proxy 100 converts the segment into a regular TCP acknowledgement and forwards it as segment 308 to end node 120 thereby also concluding the three-way handshake from the side of end node 120. At that point, a single path TCP connection is established between the end node 110 and end node 120 as a combination of a primary subflow 311 of the MPTCP connection between end node 110 and proxy 100 and a regular single path TCP connection 314 between proxy 100 and end node 120.

After the setup of the primary subflow, additional auxiliary subflows 312 may be established as illustrated by step 309. The identification of the additional auxiliary subflows may also be included in segment 305 as part of the ruleset 306. Then, end node 110 applies the ruleset and starts forwarding 310 data packets according to the forwarding rules of the ruleset along one or all the subflows 311, 312.

Similar to the example of Fig. 2, proxy 100 may also determine a second ruleset for forwarding of the data packets from the proxy towards the end node 110. The forwarding rules are the similarly applied to proxy 100 in step 313.

During the ongoing connection 150, proxy 100 may update the ruleset, i.e. send an updated ruleset to end node 110 which then on its turn updates its forwarding rules.

Fig. 3 illustrates the setup of the connection 150 wherein the MPTCP proxy 100 acts as a non-transparent proxy. In this case proxy 100 is visible to end node 110 which directly communicates with proxy 100 as network destination. Proxy 100 may further be transparent to end node 120 or not transparent when applying address translation for data packets received from end node 120 and forwarded to end node 110.

Proxy 100 may also be transparent to both end nodes 110, 120. In this case packets from end node 110 are directly destined for end node 120 and packets from end node 120 are directly destined for end node 110. In such case, proxy 100 may be able to intercept communication between the end nodes 110, 120, for example when proxy 100 also serves as a gateway for end node 110 for all networking paths, i.e. for paths 311, 312.

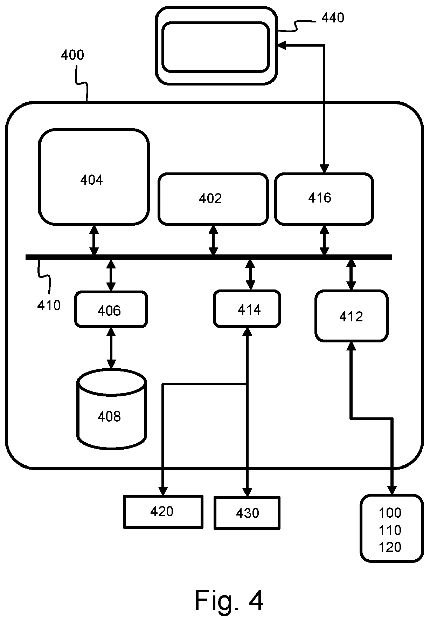

Fig. 4 shows a suitable computing system 400 comprising circuitry for performing the steps performed by the end nodes 110, 120 and proxy 100 according to the above example embodiments. Computing system 400 may in general be formed as a suitable general-purpose computer and comprise a bus 410, a processor 402, a local memory 404, one or more optional input interfaces 414, one or more optional output interfaces 416, one or more communication interfaces 412, a storage element interface 406, and one or more storage elements 408. Bus 410 may comprise one or more conductors that permit communication among the components of the computing system 400. Processor 402 may include any type of conventional processor or microprocessor that interprets and executes programming instructions. Local memory 404 may include a random-access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator or user to input information to the computing device 400, such as a keyboard 420, a mouse 430, a pen, voice recognition and/or biometric mechanisms, a camera, etc. Output interface 416 may comprise one or more conventional mechanisms that output information to the operator or user, such as a display 440, etc. Communication interface 412 may comprise any transceiver-like mechanism such as for example one or more Ethernet interfaces that enables computing system 400 to communicate with other devices and/or systems, for example with other computing devices 100, 110, 120. The communication interface 412 of computing system 400 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage element(s) 408 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" or "means" may refer to one or more or all of the following:
(a) hardware-only circuit implementations such as implementations in only analog and/or digital circuitry and
(b) combinations of hardware circuits and software, such as (as applicable):
   (i) a combination of analogue and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A multi-path conversion proxy (100) for providing multi-path network access (150) between a first (110) and second (120) end node by providing (201) a first multi-path network connection (130, 210, 211) between the first end node (110) and the multi-path conversion proxy (100), and by providing (202) a second network connection (140, 212) between the multi-path conversion proxy (100) and the second end node (120); and wherein the multi-path conversion proxy (100) is further configured to perform the following steps:
- selecting (203, 304) a forwarding ruleset (205, 306) for forwarding (210, 310) data by the first end node to the multi-path conversion proxy over subflows (210, 211, 311, 312) of the first multi-path network connection;
- pushing (204, 305) the selected forwarding ruleset (205, 306) to the first end node.

2. The multi-path conversion proxy (100) according to claim 1 wherein the forwarding ruleset (205, 306) is based on an application protocol using the first multi-path network connection.

3. The multi-path conversion proxy (100) according to claim 1 or 2 wherein the forwarding ruleset (205, 306) is based on a type of application data transported over the first multi-path network connection.

4. The multi-path conversion proxy (100) according to one of claims 1 to 3 wherein the forwarding ruleset (205, 306) comprises a program code for execution on the first end node, and the pushing comprises sending (204, 305) the executable program code to the first end node.

5. The multi-path conversion proxy (100) according to one of claims 1 to 4 wherein the selecting (204) comprises determining parameters of a predefined forwarding ruleset, and the pushing comprises sending (204, 305) the parameters to the first end node.

6. The multi-path conversion proxy (100) according to one of claims 1 to 5 further configured to perform selecting and applying (203, 207, 304) a second forwarding ruleset for relaying (209, 313) data by the multi-path conversion proxy to the first end node over the subflows (210, 211, 311, 312) of the first multi-path network connection.

7. The multi-path conversion proxy (100) according to one of claims 1 to 6 further configured to perform the steps after initializing (201) the first multi-path network connection.

8. The multi-path conversion proxy (100) according to one of claims 1 to 6 further configured to perform the steps during initialization (301, 305, 307) of the first multi-path network connection.

9. The multi-path conversion proxy (100) according to one of claims 1 to 8 wherein the first multi-path network connection is a multi-path TCP, MPTCP, connection.

10. The multi-path conversion proxy (100) according to one of claims 1 to 9 wherein the first multi-path network connection is a connection according to a QUIC transport layer network protocol.

11. The multi-path conversion proxy (100) according to one of claims 1 to 10 further comprising at least one processor (402) and at least one memory (404) including computer program code, the at least one memory and computer program code configured to, with the at least one processor, cause the performing of the multi-path conversion proxy (100).

12. A method comprising, by a multi-path conversion proxy:
- providing multi-path network access between a first (110) and second (120) end node further comprising:
∘ providing a first multi-path network connection (130) between the first end node (110) and the multi-path conversion proxy (100), and by
∘ providing a second network connection (140) between the multi-path conversion proxy (100) and the second end node (120);
- selecting (203, 304) a forwarding ruleset (205, 306) for forwarding (208, 310) data by the first end node to the multi-path conversion proxy over subflows (210, 211, 311, 312) of the first multi-path network connection;
- pushing (204, 305) the selected forwarding ruleset to the first end node.

13. A method comprising, by a first end node (110):
- establishing (201, 301, 305, 307) a first multi-path network connection having subflows (210, 211, 311, 312) with a multi-path conversion proxy (100),
- receiving (204, 305) from the multipath conversion proxy (100) a selected forwarding ruleset (205, 306) for forwarding (208, 310) data to the multi-path conversion proxy over the subflows;
- applying (206) the forwarding ruleset to the first end node.

14. A networking node (110) comprising means configured for performing:
- establishing (201, 301, 305, 307) a first multi-path network connection having subflows (210, 211, 311, 312) with a multi-path conversion proxy (100),
- receiving (204, 305) from the multipath conversion proxy (100) a selected forwarding ruleset (205, 306) for forwarding (208, 310) data to the multi-path conversion proxy over the subflows;
- applying (206) the forwarding ruleset to the first end node.

15. A computer program product comprising computer-executable instructions for causing a networking node to perform the method according to claim 12 or 13.
